# EUROPEAN PATENT APPLICATION

(11) **EP 2 733 185 A1**
(43) Date of publication of application: **21.05.2014**
(21) Application number: 12815516.5
(22) Date of filing: 27.06.2012
(51) Int. Cl.: C09J 7/02, C08F 2/48, C09J 133/06, C09J 201/00, G02B 5/30, G02B 27/28, G02F 1/1335

(54) **TRANSPARENT DOUBLE-SIDED ADHESIVE SHEET HAVING POLARIZED LIGHT ELIMINATING FUNCTION**

(30) Priority: 15.07.2011 JP 2011156302
(71) Applicant: Mitsubishi Plastics, Inc., Tokyo 100-8252 (JP)
(72) Inventor: NIIMI, Kahoru, Nagahama-shi Shiga 526-8660 (JP)
(74) Representative: HOFFMANN EITLE
(86) International application number: PCT/JP2012/066354
(87) International publication number: WO 2013/011811

(57) **Abstract**

In relation to a sheet having linearly polarized light eliminating function that is disposed on the viewing side of a polarizing film and eliminates linearly polarized light that has traversed the polarizing plate, proposed is a novel sheet having linearly polarized light eliminating function, allowing a layer having linearly polarized light eliminating function to be thinned, and furthermore, allowing manipulability when pasting the sheet to be satisfactory. Proposed is a transparent double-sided adhesive sheet provided with a adhesive layer on both front and back sides and provided with a layer having a linearly polarized-light-eliminating function (referred to as " linearly polarized-light-eliminating functional layer") as a middle layer, and the thickness of the linearly polarized-light-eliminating functional layer being within the range of 1 µm to 40 µm and smaller than the thickness of the adhesive layer on either the front or the back or the adhesive layers on both front and back sides.

## Description

### [Technical field]

The present invention relates to a transparent double-sided adhesive sheet to be placed on the viewing side of a polarizing film in an image display device. More specifically, it relates to a transparent double-sided adhesive sheet having linearly polarized light eliminating function that is capable of eliminating the occurrence of rainbow effects when an image display device is viewed through polarizing sunglasses, or the like.

### [Technical background]

In a common liquid crystal display device, an image display light originating from a liquid crystal module traverses a polarizing plate disposed on the viewing side thereof and is emitted in a linearly polarized state. Since a human eye does not perceive polarization, visibility is normally not affected even if the light is thusly emitted from a liquid crystal module in a linearly polarized state. However, if viewing is performed in a state where polarizing sunglasses are worn, when the polarization transmission axis of the emitted light and the polarization axis of the sunglasses do not match, problems sometimes arise, such as, the transmitted light becomes reduced, noticeably deteriorating visibility, and occurrence of rainbow effects.

In prior art, the method of layering a birefringent film on the viewing side of a polarizing film is used to eliminate the linear polarization of the emitted light.

For instance, proposed in Patent Document 1 is the method of disposing a translucent optical film between a display element surface polarizing plate and a surface translucent cover in an image display device, bringing the sum of the retardations of the translucent cover and the optical film to a high phase difference of 2,000 nm or greater to obtain visibility.

Proposed in Patent Document 2 and Patent Document 3 are image display devices provided with a polarization elimination layer comprising fibers or birefringent microparticles dispersed into the matrix material on the display image observer's side rather than the polarizing plate of the display element surface.

Patent Document 4 proposes a constitution in which a transparent material having a phase difference of 100 to 300 nm is disposed in front of a liquid crystal display panel, or to dispose a phase difference film of 100 to 300 nm on the liquid crystal display viewer's own polarizing lenses.

Otherwise, known are methods for eliminating the linear polarization of the emitted light by directly pasting a commercially available retardation plate onto the surface on the viewing side of the polarizing plate.

### [Prior art references]

### [Patent documents]

[Patent Document 1] Japanese Patent Application Laid-open No. 2005-157082
[Patent Document 2] Japanese Patent Application Laid-open No. 2008-310309
[Patent Document 3] Japanese Patent Application Laid-open No. 2010-091655
[Patent Document 4] Japanese Patent Application Laid-open No. 2010-044200

### [Summary of the invention]

### [Problems to be solved by the invention]

In recent years in the field of image display devices, for instance, mobile-type liquid crystal display devices, or the like, thinning has been advancing more than ever, and thinning is also demanded of sheets having linearly polarized light eliminating function.

However, from the problem of retardation control, common retardation plates require a thickness of some extent, and thus thinning is difficult to devise. In addition, if a sheet having linearly polarized light eliminating function is thinned, in the assembling step of the image display device, workability is poor due to handling being very difficult, such as, when pasting this sheet, wrinkles are introduced or distortions occur, and thus, in prior art, a sheet having linearly polarized light eliminating function can only be formed with a thickness of some extent.

Thus, the present invention relates to a sheet having linearly polarized light eliminating function that is disposed on the viewing side of a polarizing film and eliminates linearly polarized light that has traversed the polarizing plate, and proposes a novel sheet having linearly polarized light eliminating function, allowing a layer having linearly polarized light eliminating function to be thinned, and furthermore, allowing manipulability (this may also be referred to as "handleability") when pasting the sheet to be satisfactory.

### [Means to solve the problems]

The present invention proposes a transparent double-sided adhesive sheet, which is a transparent double-sided adhesive sheet to be placed on the viewing side of a polarizing film in an image display device, provided with a adhesive layer on both front and back sides and provided with a layer having a linearly polarized-light-eliminating-function (referred to as " linearly polarized-light-eliminating functional layer") as a middle layer, the thickness of the linearly polarized-light-eliminating functional layer being within the range of 1 µm to 40 µm and smaller than the thickness of the adhesive layer on either the front or the back or the adhesive layers on both front and back sides.

### [Effects of the invention]

Since the transparent double-sided adhesive sheet proposed by the present invention has a linearly polarized light eliminating functional layer, by being placed on the viewing side of a polarizing film in an image display device, linearly polarized light that has traversed a polarizing plate can be eliminated. Thus, when an image display device is viewed through polarizing sunglasses, or the like, problems that the field of view becomes dark or rainbow effects occur can be eliminated, which can ensure the image visibility adequately.

Moreover, since handling can be facilitated by layering adhesive layers on both sides of the linearly polarized-light-eliminating functional layer to maintain the thickness of the entirety of the sheet, the thickness of the linearly polarized-light-eliminating functional layer can be thinned while maintaining the manipulability (handleability) of the sheet.

In addition, since an adhesive layer is provided on both front and back sides of the linearly polarized-light-eliminating functional layer, when the transparent double-sided adhesive sheet is incorporated into an image display device, the linearly polarized-light-eliminating functional layer at least does not come in contact with an air layer, thus, obviously no interface exists between the linearly polarized-light-eliminating functional layer and the air layer, and since there is no loss of light due to a reflection at the interface, there is no risk of causing a deterioration of visibility.

### [Modes for carrying out the invention]

In the following, the present invention will be described based on examples of embodiment; however, the present invention is not limited to the embodiments described in the following.

### <The transparent double-sided adhesive sheet >

The transparent double-sided adhesive sheet according to one exemplary embodiment of the present invention (referred to as "the present transparent double-sided adhesive sheet ") is a transparent double-sided adhesive sheet that is provided with a linearly polarized light eliminating functional layer as a middle layer and is provided with an adhesive layer on both front and back sides.

### (Linearly polarized-light-eliminating functional layer)

A linearly polarized-light-eliminating function is a function that eliminates linearly polarized light by one method or another, such as by changing a linearly polarized light into a circularly polarized light or an elliptically polarized light. For instance, if a linearly polarized-light-eliminating functional layer is placed on the display-emitted light side, linear polarization of the display-emitted light can be eliminated and, for instance, when a screen is seen through polarizing sunglasses, or the like, occurrence of a dark field or a rainbow effect can be eliminated.

It is desirable for the linearly polarized-light-eliminating functional layer of the present transparent double-sided adhesive sheet to not use a generic retardation plate and use a uniaxially or biaxially stretched film comprising a specific resin, and, among these, it is more desirable to select and use those with an in-plane birefringence of 0.003 to 0.050.

As uniaxially or biaxially stretched films comprising a specific resin, for instance, uniaxially or biaxially stretched films comprising a mixed resin of one species or two or more species chosen from the group comprising polyester series resin, polycarbonate series resin, polyolefin series resin, polystyrene series resin, polyether series resin, polyphenylene series resin, polyamide series resin and polyimide series resin, can be cited.

Among these, biaxially stretched films are desirable if thinning is taken into consideration, and if cost or the like is further added, biaxially stretched films comprising polyethylene terephthalate are particularly desirable.

In order to eliminate the linear polarization of the display-emitted light and suppress the occurrence of rainbow effect in an image display device when, for instance, the image display device is viewed through polarizing sunglasses, or the like, it is necessary to control the retardation of the linearly polarized-light-eliminating functional layer to a desirable range. Since the retardation is determined by the product of in-plane birefringence and thickness, it is desirable to determine the in-plane birefringence while taking the thickness of the linearly polarized-light-eliminating functional layer into consideration.

For instance, since the in-plane birefringence is generally relatively high in the case of a commercially available biaxially stretched PET film, the thickness of the film has to be thinned for a control into the desirable retardation. Conversely, when thickening the biaxially stretched PET film used as the linearly polarized-light-eliminating functional layer is desired, it is necessary to select those with a low in-plane birefringence. While generally referred to as biaxially stretched PET films, since the in-plane birefringence is different depending on the film-fabrication method or the film-fabrication conditions, materials having desired in-plane birefringences can be selected among the biaxially stretched PET films.

When the desired retardation, handleability, and the like, are taken into consideration, it is desirable for the linearly polarized-light-eliminating functional layer to have a layer thickness of 1 µm to 40 µm and an in-plane birefringence of 0.003 to 0.050.

When the desired retardation and handleability, and the like, are taken into consideration, 1 µm to 40 µm is desirable for the layer thickness of the linearly polarized-light-eliminating functional layer, of which, 3 µm or greater or 25 µm or less, and among these, 4 µm or greater or 15 µm or less, is desirable.

From the point of view of obtaining the desired retardation in the above-mentioned layer thickness, 0.003 to 0.050 is desirable for the in-plane birefringence of the linearly polarized-light-eliminating functional layer, of which 0.005 or greater or 0.04 or less, and among these, 0.01 or greater or 0.03 or less, is particularly desirable.

If the in-plane birefringence of the linearly polarized-light-eliminating functional layer is 0.003 or greater, anisotropy is not too small, which allows the linearly polarized-light-eliminating function to be obtained sufficiently in the desired thickness range. Meanwhile, if the in-plane birefringence is 0.050 or less, handleability of the linearly polarized-light-eliminating functional layer at processing can be maintained satisfactorily, even if the thickness is thinned so as to suppress rainbow effects.

Managing the in-plane birefringence in the above-mentioned range allows the necessary optical function to be conferred while maintaining a thickness that gives a suitable degree of handleability to the linearly polarized-light-eliminating functional layer.

As described above, the in-plane birefringence is a value that can be adjusted suitably by way of the film-forming method, the film-forming conditions, and the like, in addition to the species of the resin.

For instance, when forming a linearly polarized-light-eliminating functional layer from a biaxially stretched PET film, 3 µm to 38 µm is desirable for the layer thickness of the linearly polarized-light-eliminating functional layer, of which 25 µm or less, and among these, 4 µm or greater or 15 µm or less, is desirable, and for the in-plane birefringence, 0.003 to 0.050 is desirable, of which 0.004 or greater or 0.040 less, and among these, 0.010 or greater or 0.030 or less, is desirable.

### (Adhesive layer)

The adhesive layer on both front and back sides can all be formed from adhesives, such as, for instance, rubber series adhesives, polyester series adhesives, epoxy series adhesives, acrylic series adhesives, silicon series adhesives, urethane series adhesives, vinyl alkyl ether series adhesives, polyvinyl alcohol series adhesives, polyacrylamide series adhesives and cellulose series adhesives. Among these, acrylic series adhesives of the ultraviolet curing type or heat curing type are desirable.

As acrylic series adhesives, those formed from adhesive compositions (hereafter referred to as "the present adhesive composition") that use a (meth)acrylic acid ester series polymer (hereafter referred to as "acrylic acid ester series (co-)polymer" with the meaning of including copolymers) as base resin can be cited.

It is possible to prepare an acrylic acid ester series (co-)polymer serving as base resin by selecting suitably the species and composition ratio of the acrylic monomer or methacrylic monomer used to polymerize this, furthermore, the polymerization conditions, and the like, to adjust physical properties such as glass transition temperature (Tg) and molecular weight suitably.

As acrylic monomers and methacrylic monomers used to polymerize an acrylic acid ester (co-)polymer, for instance, 2-ethylhexyl acrylate, n-octylacrylate, isooctyl acrylate, n-butyl acrylate, ethyl acrylate, methyl methacrylate, methyl acrylate, and the like, can be cited. In addition, an acrylic monomer having a hydrophilic group, an organic functional group, or the like, such as, hydroxyethyl acrylate, acrylic acid, glycidyl acrylate, acrylamide, acrylonitrile, methacrylonitrile, fluorine acrylate and silicon acrylate, can be copolymerized with the above-mentioned acrylic monomer. In addition to these, various vinyl monomers such as vinyl acetate, alkyl vinyl ether and hydroxyalkyl vinyl ether can be used suitably for polymerization.

Well-known polymerization methods such as solution polymerization, emulsion polymerization, bulk polymerization and suspension polymerization can be adopted as polymerization treatments that use these monomers, and in so doing, using a polymerization initiator such as a thermal polymerization initiator or a photopolymerization initiator according to the polymerization method allows an acrylic acid ester copolymer to be obtained.

While the adhesive layers on both front and back sides may be formed from adhesives with the same composition to one another, when the present transparent double-sided adhesive sheet is used in an image display device, between the adhesive layer on the front side and the adhesive layer on the back side, the species and roles of the adherends are different, and thus, it is desirable to select accordingly the compositions and form the layers from adhesives with different compositions from one another.

It suffices that the thickness of the adhesive layer on one either front or back side or the adhesive layers on both front and back sides is greater than the thickness of the linearly polarized-light-eliminating functional layer. Concretely, the thickness of the adhesive layer on one either front or back side or the adhesive layers on both front and back sides is preferably in the range of 25 µm to 900 µm, of which 100 µm or greater or 350 µm or less is more desirable.

When the present transparent double-sided adhesive sheet is used in an image display device, between the adhesive layer on the front side and the adhesive layer on the back side, the species and roles of the adherends are different, and thus, it is desirable to adjust the thickness of the adhesive layer accordingly.

In addition, the adhesive layer on either side or both sides may be a adhesive layer formed from a primary crosslinked adhesive composition and further having potential UV light secondary curability.

A adhesive layer having potential UV light secondary curability can be obtained by incorporating in the composition a photopolymerization initiator of the intermolecular hydrogen abstraction type, suitably adjusting the composition and the conditions for primary crosslinking, and leaving room for secondary curing reactivity by UV light.

In addition to heat curing agents and ionic crosslinking agents, any methods such as electron beam or ultraviolet irradiation can be used for the primary crosslinking reaction.

In a state that is primary crosslinked in advance and prior to secondary curing, given that ultraviolet reactivity can be left, in other words, room allowing for further curing is left, it is flexible by as much, and even if irregularities are present on the surface of the adherend, or a foreign substance, or the like, is present at the adhesion interface, these irregularities can be sufficiently followed and adapted to. Thus, if two image display device constitutive members are layered through such a transparent double-sided adhesive sheet prior to secondary curing, each image display device constitutive member can be tightly adhered to, and, moreover, after being tightly adhered to in this way, by irradiating ultraviolet light, they can be UV-crosslinked (secondary cured) to be bonded firmly. Thus, by layering two image display device constitutive members through such a transparent double-sided adhesive sheet prior to secondary curing, then, irradiating ultraviolet light from at least one image display device constitutive member side, and, through this member, UV-crosslinking and secondary curing the transparent double-sided adhesive sheet , the transparent double-sided adhesive sheet can be crosslinked firmly, and, adhesive force and cohesive force to extents that can sufficiently counter, for instance, the gas pressure of an outgas generated from a protective panel, or the like, can be conferred.

As the hydrogen-abstraction-type photoinitiators, for instance, any of benzophenone, Michler ketone, dibenzosuberone, 2-ethyl anthraquinone, thioxanthone, benzyl and the like, or derivatives thereof, or mixed components comprising a combination of two or more of these, can be used. However, there is no limitation to the substances cited above as photoinitiators of the hydrogen abstraction type. In addition, if a photopolymerization initiator of the hydrogen abstraction type is included in the adhesive sheet, a photopolymerization initiator of the intramolecular cleavage type can be used in combination in a variety of proportions.

There is no particular limitation to the additive amount of hydrogen-abstraction-type initiator, which is desirable to adjust, at proportions with respect to 100 parts by mass of base resin of 0.1 to 10 parts by mass in general, and 0.2 parts by mass or more or 5 parts by mass or less, of which 0.5 parts by mass or more or 3 parts by mass or less, in particular. However, this range may be exceeded due to balancing with other elements.

Further in addition, it is also possible that the adhesive layer on either one side forms from a adhesive composition comprising a (meth)acrylic acid ester series compound and an intermolecular hydrogen-abstraction-type photopolymerization initiator, and the adhesive layer on the other side to be formed from a adhesive composition of the heat curing type.

In so doing, the mass average molecular weight of the base polymer of the adhesive composition is preferably 300,000 to 1,000,000. By bringing the molecular weight of the base polymer of the adhesive composition to 300,000 to 1,000,000, a sufficient bonding strength with respect to a wide-ranging species of adherend can be exerted.

### (UV light absorption function)

In addition, among the above front side adhesive layer, back side adhesive layer and linearly polarized-light-eliminating functional layer, any one layer, or two layers, or more, may have a UV light absorption function. Thusly, for instance, even when a functional layer comprising a member vulnerable to UV light is disposed on the viewing side of a liquid crystal module, since the aforementioned layer having UV light absorption function absorbs UV light, the functional layer can be protected.

To give a UV light absorption function to each layer mentioned above, the method of incorporating a UV absorbent in the resin composition that forms any layer among the front side adhesive layer, the back side adhesive layer and the linearly polarized-light-eliminating functional layer to serve as a UV light absorption layer, and the method of layering a UV light absorption layer containing a UV absorbent on any layer among the front side adhesive layer, the back side adhesive layer and the linearly polarized-light-eliminating functional layer, may be cited.

In so doing, it is desirable for the UV light absorption layer that the light transmittance at 380 nm wavelength is 30% or less, and the visible light transmittance on a longer wavelength side than 430 nm wavelength is 80% or greater. If the transmittance at 380 nm wavelength is 30% or less, a functional layer such as a functional film inside the image display device can be protected from the UV light entering from the viewing side, in addition, if the visible light transmittance on a longer wavelength side than 430 nm wavelength is 80% or greater, even when the layer is placed inside an image display device and used, visible radiation from the viewing side of the image display device is transmitted sufficiently, allowing visibility to be secured, which is thus desirable.

As the UV absorbents, for instance, benzotriazole series UV absorbents, triazine series UV absorbents, benzophenone series UV absorbents, benzoate series UV absorbents, and the like, can be cited. These may be used alone or by the combined use of two species or more.

UV light can also be blocked by dispersing inorganic series nanoparticles such as zinc oxide and titanium oxide within a sheet, thereby scattering ultraviolet region light that has entered the sheet. Including the UV absorbents mentioned above, these may be used alone or by the combined use of two species or more.

The UV absorbent content in the UV light absorption layer is preferably 0.01 mass% to 40 mass% of the total mass of resin forming the UV light absorption layer, more preferably 0.1 mass% to 30 mass%, and more preferably 0.5 mass% to 20 mass%. If 40 mass% or less, there is no risk that a defect in appearance due to the UV absorbent's own coloration, or, a decrease in adhesive properties due to deposition, floating-out, bleed-out to an adjacent layer or to an adherend, of an additive, occurs. In addition, if 0.01 mass% or greater, conferring a predetermined UV light absorbency is facilitated, and there is no risk such as the function of protecting an adherend from UV light is poor.

When either one of the front side adhesive layer and the back side adhesive layer is a adhesive layer that has been primary cured by UV light and possesses potential secondary curability, it is desirable, so as not to impede the secondary curing reaction of the adhesive layer, that UV light absorbency is conferred to the other adhesive layer or the linearly polarized-light-eliminating functional layer.

In addition, when adhering the double-sided adhesive sheet on the viewing side of the liquid crystal module, it is desirable that the UV light absorption layer is placed on the liquid crystal module side and the adhesive layer possessing potential secondary curability is placed on the viewing side. This allows the UV light entering from the viewing side to be used for secondary crosslinking and the liquid crystal module side to be protected from the UV light, at the same time.

### (Parting layer)

The present transparent double-sided adhesive sheet may be provided with a layer other than the adhesive layer and the linearly polarized-light-eliminating functional layer, so as to be functionally added aside from the linearly polarized-light-eliminating function.

For instance, it is possible to form a parting layer between the adhesive layer on one of the front and back sides and the linearly polarized-light-eliminating functional layer and configure the sheet to be releasable at the interface between the adhesive layer on one of the front and back sides and the parting layer, after the transparent double-sided adhesive sheet has been adhered to adherend members.

In this way, after members have been adhered to the front and the back sides of the double-sided adhesive sheet, re-separation of the adhered and unified members is possible at the interface between the parting layer and the adhesive layer in contact with the parting layer. For instance, if the adhesion location is offset, after peeling and detaching the members at the interface between the adhesive layer and the parting layer, the adhesion location can be corrected and the members can be adhered again.

The parting layer can be formed with a common printing method, such as, gravure-printing method, screen-printing method or offset-printing method, by coating and drying a coat dissolved in an organic solvent or water having as a main component a resin such as, for instance, silicon resin, fluorine resin, aminoalkyd resin, polyester resin, paraffin wax, acrylic resin, urethane resin, melamine resin, urea resin, urea-melamine series, cellulose or benzoguanamine, and a surfactant, alone or a mixture thereof. Curable coating films such as thermosetting resin, UV-curable resin, electron-beam-curable resin and radiation-curable resin can be formed by curing.

It is particularly desirable to perform a release treatment by silicon or fluorine compound, alkyd resin series release treatment agent, or the like.

### <Physical properties of the present double-sided transparent adhesive sheet>

From the point of view of handleability and thinning demanded of the application member, it is desirable for the thickness of the present double-sided transparent adhesive sheet that the total thickness is 0.05 mm to 1 mm, of which 0.1 mm or greater or 0.8 mm or less, and of these, 0.15 mm or greater or 0.5 mm or less, are more desirable.

It is desirable for the present double-sided transparent adhesive sheet that, when sandwiched between 0.5 mm-thick soda lime glasses, (1) the retardation value at 590 nm wavelength is 20 nm to 200 nm.

So as to allow a stable visibility with little color irregularities to be secured over broad angles even when a face is inclined while polarizing sunglasses are worn, it is desirable for the present double-sided transparent adhesive sheet that retardation at 590 nm wavelength is 20 nm to 200 nm, of which 50 nm or greater or 180 nm or less, and of these, 80 nm or greater or 150 nm or less, are particularly desirable.

Further, it is all the more desirable for the present double-sided transparent adhesive sheet that, when sandwiched between 0.5 mm-thick soda lime glasses, the following (2) and (3) are fulfilled:
(2) the total light transmittance measured according to JIS K7361-1 is 85% or greater
(3) the haze value measured according to JIS K7136 is 5% or less

In addition to a function for eliminating linearly polarized light, the present transparent double-sided adhesive sheet preferably has a function for transmitting as-is the image display light from a liquid crystal module. Thus, it is desirable for the total light transmittance of the present double-sided transparent adhesive sheet to be 85% or greater, as in (2) above, and more preferably, 90% or greater.

Even if the total light transmittance is high, the emitted light scatters if there is cloudiness in the adhesive sheet, causing visibility to decrease; therefore, as in (3) above, 5% or less is desirable for the haze of the present double-sided transparent adhesive sheet, further preferably 3% or less, and more preferably 1% or less. Having such optical properties, allow excellent visibility of the display image to be secured.

### <Production method for the present double-sided transparent adhesive sheet>

Next, one example of production method for the present double-sided transparent adhesive sheet will be described.

First, the adhesive compositions forming the adhesive layers of the front and the back are respectively coated over the parting treatment surface of processing release films (for instance, parting PET films) so as to reach target thicknesses and be formed into films. Next, the sheet can be formed by layering a film constituting the linearly polarized-light-eliminating functional layer so as to be sandwiched with the adhesive layers of the front and the back, and as necessary performing a crosslinking treatment such as heating, ultraviolet irradiation or curing.

When the adhesive layers of the front and the back or the linearly polarized-light-eliminating functional layer to serve as a substrate have a multilayer constitution, aside from the method of sequentially layering separately prepared constitutive layers, a portion or the entirety of the layered constitution can be obtained by co-extrusion.

### <Applications of the present double-sided transparent adhesive sheet>

Since the present transparent double-sided adhesive sheet is provided with a linearly polarized-light-eliminating functional layer, by being placed on the viewing side of a polarizing film in an image display device, that is to say, by being placed between a surface protection panel and the viewing side of a liquid crystal module, linearly polarized light emitted from a liquid crystal module by traversing a polarizing plate can be eliminated. Thus, in cases where an image display device is viewed through polarizing sunglasses, or the like, occurrence of a dark field or a rainbow effect can be suppressed, allowing image visibility to be ensured. Moreover, since a adhesive layer is provided on both front and back sides of the linearly polarized-light-eliminating functional layer, the linearly polarized-light-eliminating functional layer at least does not come into contact with an air layer, thus, since there is no loss of light due to an interface reflection between the linearly polarized-light-eliminating functional layer and an air layer, there is no risk of causing a deterioration of visibility. In addition, since gaps and steps can be filled with the adhesive layer, contributing to thinning of the entirety of the image display device is also possible.

Thus, the present transparent double-sided adhesive sheet is particularly suitable, for instance, in an image display device, for adhering and unifying a touch panel functional layer and a surface protection panel, or, for adhering and unifying a liquid crystal module and a touch panel functional layer.

### <Explanation of terms>

In general, a "film" designates a thin, flat product, which thickness is extremely small compared to the length and width, which maximum thickness is arbitrarily limited, conventionally provided in the form of a roll (Japanese industry specification JISK6900), and in general a "sheet" designates a flat product, which is thin according to definitions in JIS, and which thickness is generally small for the length the width. However, the boundary between a sheet and a film is not determined, and since there is no need to distinguish the the both textually in the present invention, in the present invention, "sheet" is deemed included even when referring to "film", and "film" is deemed included even when referring to "sheet".

In addition, in the present specification, the expression "X to Y" (X and Y represent arbitrary numbers), unless explicitly stated otherwise, includes the meaning of "X or greater and Y or less" along with the meaning of "preferably larger than X" or "preferably smaller than Y".

In addition, the expression "X or greater" (X is an arbitrary number) or "Y or less" (Y is an arbitrary) includes the intent to the effect of "lager than X is desirable" or "less than Y is desirable".

### [Examples]

Hereafter, the present invention will be detailed further based on the following examples and comparative examples.

### <Example 1>

As an adhesive composition for forming a first adhesive layer, an adhesive composition 1 was prepared by formulating 2.5 g of an epoxy series curing agent solution (E-AX, manufactured by Soken Chemical Engineering, Co., Ltd) with respect to 1 kg of an adhesive resin solution diluted with ethyl acetate to 25% solid content from an acrylic acid ester copolymer comprising 70 parts by mass butyl acrylate, 20 parts by mass methyl methacrylate, 9 parts by mass methyl acrylate and one part by mass acrylic acid, which have been random-copolymerized.

Meanwhile, as an adhesive composition for forming a second adhesive layer, an adhesive composition 2 was prepared by adding 5 g of the UV-crosslinking agent pentaerythritol triacrylate and 5 g of 4-methyl benzophenone as a photopolymerization initiator, with respect to 1 kg acrylic acid ester copolymer comprising 70 parts by mass 2-ethylhexyl acrylate, 26 parts by mass vinyl acetate and 4 parts by mass acrylic acid, which have been random-copolymerized.

The adhesive composition 1 was applied to a processing release film 1 ("MRA100", manufactured by Mitsubishi Plastics Inc.; thickness: 100 µm) and dried so that the thickness after drying reached 25 µm, thereafter, on the adhesive side thereof, a linearly polarized light eliminating layer 1 comprising a polyethylene terephthalate biaxially stretched film ("Diafoil", manufactured by Mitsubishi Plastics Inc.; thickness: 5 µm; in-plane birefringence: 0.016) was layered to form a layered sheet comprising the constitution: processing release film 1/adhesive layer 1/linearly polarized light eliminating layer 1.

The adhesive composition 2 was applied to a processing release film 2 ("MRF75", manufactured by Mitsubishi Plastics Inc; 75 µm) so that the thickness after drying reached 150 µm to form a adhesive layer 2, the linearly polarized light eliminating layer 1 of the above layered sheet was layered on this adhesive layer 2 to form a layered sheet comprising processing release film 1/adhesive layer 1/linearly polarized light eliminating layer 1/adhesive layer 2/processing release film 2, and against this layered sheet, UV light was irradiated from both front and back sides through the processing release films 1 and 2 so that the integrated amount of light at 365 nm wavelength reached 2,000 mJ/cm² to proceed with the crosslinking reaction of the adhesive layer 2. Thereafter, the layered sheet was cured under the environment of 25°C temperature and 40% humidity for one week to proceed with the crosslinking reaction of the adhesive layer 1 and prepare a double-sided adhesive sheet 1 [adhesive layer 1 (25 µm)/linearly polarized light eliminating layer 1 (5 µm)/adhesive layer 2 (150 µm) = 180 µm total thickness] comprising processing release film 1/adhesive layer 1(linearly polarized light eliminating layer 1/adhesive layer 2/processing release film 2.

### <Example 2>

In a similar manner to Example 1 except that, alternatively to the linearly polarized light eliminating layer 1, a linearly polarized light eliminating layer 2 was formed using a polyethylene terephthalate biaxially stretched film ("Melinex #850", manufactured by Teijin DuPont Films; thickness: 15 µm; in-plane birefringence: 0.012), a double-sided adhesive sheet 2 [adhesive layer 1 (25 µm)/linearly polarized light eliminating layer 2 (15 µm)/adhesive layer 2 (150 µm) = 190 µm total thickness] comprising processing release film 1/adhesive layer 1/linearly polarized light eliminating layer 2/adhesive layer 2/processing release film 2 was prepared.

### <Example 3>

In a similar manner to Example 1 except that, alternatively to the linearly polarized light eliminating layer 1, a linearly polarized light eliminating layer 3 was formed using a polycarbonate uniaxially stretched film ("Elmec R40" manufactured by Kaneka Corporation; thickness: 40 µm; in-plane birefringence: 0.004) and the thickness of the adhesive layer 2 was 135 µm, a double-sided adhesive sheet 3 [adhesive layer 1 (25 µm)linearly polarized light eliminating layer 2 (40 µm)ladhesive layer 2 (135 µm) = 200 µm total thickness] comprising processing release film 1/adhesive layer 1/linearly polarized light eliminating layer 3/adhesive layer 2/processing release film 2 was prepared.

### <Example 4>

In a similar manner to Example 3 except that, alternatively to the adhesive composition 1, an adhesive composition 3 in which 2.5 g of an epoxy series curing agent solution (E-AX, manufactured by Soken Chemical Engineering, Co., Ltd) and 2 g of UV absorbent (TINUVIN 329, manufactured by BASF) were formulated with respect to 1 kg adhesive resin solution diluted with ethyl acetate to 25% solid content from an acrylic acid ester copolymer comprising 70 parts by mass butyl acrylate, 20 parts by mass methyl methacrylate, 9 parts by mass methyl acrylate and one part by mass acrylic acid, which were random-copolymerized, was used, a double-sided adhesive sheet 4 [adhesive layer 3 (25 µm)/linearly polarized light eliminating layer 2 (40 µm)/adhesive layer 2 (135 µm) = 200 µm total thickness] comprising processing release film 1/adhesive layer 1/linearly polarized light eliminating layer 3/adhesive layer 2/processing release film 2 was prepared.

### <Comparative Example 1>

The adhesive composition 2 used in Example 1 was applied to a processing release film 1 ("MRA 100", manufactured by Mitsubishi Plastics Inc.; thickness: 100 µm) so that the thickness after drying reached 180 µm to form a adhesive layer 3, and a processing release film 2 ("MRF75", manufactured by Mitsubishi Plastics Inc.; thickness: 75 µm) was layered on the coated adhesive side to form a layered sheet. Against this layered sheet, UV light was irradiated from both front and back sides through the processing release films 1 and 2 so that the integrated amount of light at 365 nm wavelength reached 2,000 mJ/cm² to proceed with the crosslinking reaction of the adhesive layer 3, and a monolayer adhesive sheet 5 [180 µm total thickness] of the adhesive layer 3 was prepared.

### <Comparative Example 2>

In a similar manner to Example 1 except that adhesive layer 2 was not layered in Example 1, a single-sided adhesive sheet 6 [adhesive layer 1 (25 µm)/linearly polarized light eliminating layer 1 (5 µm) = 30 µm total thickness] comprising processing release film 1/adhesive layer 1/linearly polarized light eliminating layer 1 was prepared.

### <Comparative Example 3>

In a similar manner to Example 3 except that, alternatively to the linearly polarized light eliminating layer 3, a substrate layer 4 was formed using a polyethylene terephthalate biaxially stretched film ("T-100", manufactured by Mitsubishi Plastics Inc.; thickness: 50 µm; in-plane birefringence: 0.017), a double-sided adhesive sheet 7 [adhesive layer 1 (25 µm)/substrate layer 4 (50 µm)/adhesive layer 2 (135 µm) = 210 µm total thickness] comprising processing release film 1/adhesive layer 1/substrate layer 4/adhesive layer 2/processing release film 2 was prepared.

### <Comparative Example 4>

In a similar manner to Example 1 except that, alternatively to the linearly polarized light eliminating layer 1, a substrate layer 5 was formed using a polycarbonate uniaxially stretched film ("T-138" manufactured by Teijin Chemicals Ltd.; thickness: 70 µm; in-plane birefringence: 0.002) and the thicknesses of the adhesive layer 1 and the adhesive layer 2 were respectively 30 µm and 60 µm, a double-sided adhesive sheet 8 [adhesive layer 1 (30 µm)/substrate layer 5 (70 µm)/adhesive layer 2 (60 µm) = 160 µm total thickness] comprising processing release film 1/adhesive layer 1/substrate layer 5/adhesive layer 2/processing release film 2 was prepared.

### <Evaluation>

### (Optical measurements)

Samples were produced, in which the adhesive sheets prepared in the examples and comparative examples were sandwiched between 0.5 mm-thick soda lime glasses, and the phase difference meter KOBRA-WR (manufactured by Ojl Scientific Instruments) was used to measure at 589 nm the in-plane birefringence, the retardation value and the slow axis angle.

The same samples were used to measure the total light transmittance and haze value using the haze-meter NDH5000 (manufactured by Nippon Denshoku Industries Co., Ltd.). The spectral transmittance was measured using the spectrophotometer UV2450 (manufactured by Shimadzu Corp.).

Regarding the adhesive sheet 6 (Comparative Example 2), which is a single-sided adhesive sheet, it was measured with one whereof the adhesive layer of one side was adhered to glass.

The measurement results of in-plane birefringence as well as retardation value (nm), haze, total light transmittance and spectral transmittances at 380 nm and 430 nm are indicated in Table 1.

### (External appearance examination)

The adhesive sheets prepared in examples and comparative examples were cut into 80 mm × 50 mm rectangles, matching the long axis with an orientation that forms an angle of 45° with respect to the slow axis angle. To the adhesive sides exposed by peeling sequentially the front and back processing release films of the cut adhesive sheet, 80 mm × 50 mm × 0.5 mm-thick soda lime glasses were adhered to prepare a sample in which the two sides were sandwiched with glasses.

Regarding the adhesive sheet 6 (Comparative Example 2), which is a single-sided adhesive sheet, a sample was prepared with the constitution [glass/adhesive layer 1/substrate layer 1/air layer/ glass] by adhering the adhesive layer of one side to glass, and further pacing and fixing a glass thereon through the intermediary of a 160 µm spacer in the periphery, and observed.

Polarizing plate/sample/polarizing plate were placed in this order on the stage of a transmission-illuminator-equipped stage (ENV-CL, manufactured by Otsuka Optics Co., Ltd.). At this time, the angle formed by the orientation axis of the polarizing plate on the stage side and the slow axis of the sample was 45°, and the polarizing plate on the top side was in a parallel Nicol state with the stage-side polarizing plate. NWF-KDSEGHC-ST22 manufactured by Nitto Denko Corp. was used for the polarizing plates.

Light was emitted vertically upward from the stage light source, the light was transmitted through the polarizing plate/sample/polarizing plate layered body, and the external appearance was observed visually.

Next, the polarizing plate on the top side was rotated 90° clockwise and the external appearance during light transmission was observed similarly to check whether or not there was a noticeable decrease in visibility in either parallel Nicol/crossed Nicol states, such as, states in which almost no light is transmitted (darkening), and cases where noticeable color irregularities are observed (rainbow effects).

Those with no external appearance defect as sample alone as well as no decrease in visibility during polarizing plate intercalation were assessed as "○ (circle)" and those in which a defect was observed in either as "× (cross)".

### (Adhesion reliability)

A 6 mm-wide, 30 µm-thick print was applied at the periphery of an 85 mm × 55 mm × 1.0 mm-thick soda-lime glass to prepare an evaluation glass substrate having a 30 µm print-step at the periphery.

Cut similarly to the external appearance evaluation, the release film on the adhesive layer 2 side was peeled-off, and the exposed adhesive side was adhered with a hand roller so as to cover the print-step portion of the glass substrate. Next, the remaining release film was peeled-off, the untreated soda lime glass used in the external appearance evaluation was press-bonded to the exposed adhesive side under reduced pressure (absolute pressure: 5 kPa) to serve as a sample.

Autoclave treatment (60°C; gauge pressure: 0.3 MPa) was performed on the bonded product (sample) for finish-adhesion to prepare a laminate, this was left alone in an ordinary state (23°C temperature, 50% humidity) for one day and then the external appearance was observed visually.

Upon visual observation, those with foaming or peeling occurring near a print-step were assessed as "× (cross)" and those in which no occurrence was observed as "○(circle)".

Since the space between members cannot be filled with the adhesive sheet 6 (Comparative Example 2), which is a single-sided adhesive sheet, evaluation of adhesion reliability carried out by sandwiching a sheet between substrates was not carried out.

**[Table 1]**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Retardation | | 80nm | 180nm | 140nm | 140mn | <5nm | 80nm | 850nm | 130nm |
| In plane birefringence | | 0.016 | 0.012 | 0.004 | 0.004 | 0 | 0.016 | 0.017 | 0.002 |
| Haze | | 2.0% | 1.4% | 0.3% | 0.4% | 0.2% | 0.5% | 0.6% | 0.3% |
| Total light transmittance | | 90% | 90% | 91% | 90% | 91% | 84% | 89% | 91% |
| Spectral transmittance | 430nm | 87% | 89% | 89% | 88% | 91% | 82% | 88% | 90% |
| | 380nm | 80% | 81% | 87% | 3% | 81% | 81% | 81% | 88% |
| External appearance examination | Glass - bonded product only | ○ | ○ | ○ | ○ | ○ | × (substrate scratches) | ○ | ○ |
| | During parallel Nicol polarizing plate layering | ○ | ○ | ○ | ○ | ○ | ○ | × (rainbow effect) | ○ |
| | During crossed Nicol polarizing plate layering | ○ | ○ | ○ | ○ | × (darkening) | ○ | × (rainbow effect) | ○ |
| | Adhesion reliability | ○ | ○ | ○ | ○ | ○ | - | ○ | × (forming) |

It was found that, by providing the double-sided adhesive sheet with a suitable degree of anisotropy, Examples 1 to 4 did not provoke noticeable visibility decrease, the light traversing the layered body at parallel and crossed Nicol, that is to say, in all cases when watching an image through polarizing sunglasses, or the like. Furthermore, from the fact that, by sandwiching the front and back sides of the linearly polarized light eliminating layer with adhesive sheets, it is possible to fill the irregularities and scratches on the linearly polarized light eliminating layer surface with a flexible adhesive layer and hold the flaws to a minimum, the external appearance could be rendered satisfactory in not-through-polarizing-plate cases.

In addition, with Example 4, since the adhesive layer 3 having UV absorption function was layered, not only the linearly polarized-light-eliminating function, but also the effect of protecting the bonded member from UV light can be anticipated. Moreover, since the visible range light is transmitted sufficiently, it is considered that visibility can be ensured sufficiently even when the sheet is placed and used inside an image display device.

In addition, as in Example 1, even when a thin polyethylene terephthalate biaxially stretched film (thickness: 5 µm) was used as the linearly polarized light eliminating layer, handleability could be increased by giving thickness with an adhesive layer. This not only contributes to workability improvement during production, but also allows the effect of contributing to a further thinning of liquid crystal modules to be anticipated.

Regarding Examples 2 and 3, handleability was satisfactory and there was no problem, similarly to Example 1.

In contrasts, since Comparative Example 1 was formed by layering only an isotropic adhesive layer, the polarization state of the emitted light was not affected, as a result, the light did not traverse the top side polarizing plate and darkened at crossed Nicol, visibility during polarizing plate intercalation could not be ensured, which was inadequate.

While Comparative Example 2 could ensure visibility during polarizing plate intercalation with a birefringent substrate film, since there was no adhesive layer to fill the scratches and irregularities on the substrate, not only the flaws of the sheet stood out, but the loss of light by the interface reflection between the air layer and glass was also large since it is a single-sided adhesive sheet, such that the visibility was poor compared to when a double-sided adhesive sheet was used.

While light is transmitted with the linear polarization eliminated by a birefringent linearly polarized light eliminating layer, Comparative Example 3 is difficult to describe as one in which visibility is adequate, since, due to the thickness being thick with respect to the birefringence value of the film used, retardation is high, generating interference colors, thereby giving rainbow effects.

While visibility during polarizing plate intercalation was no problem for Comparative Example 4 as a uniaxially stretched phase difference film was layered, it was found to be inadequate to be used in the present objective since, the adhesive layers situated on the front and the back being both thinner than the linearly polarized light eliminating layer, it had poor flexibility, such that when pasted to a surface protection panel that possesses a print-step, air-bubbles were generated along the step in the periphery and could not be bonded directly to the surface protection panel.

It is thought from the above points that, by using the present double-sided adhesive sheet on the surface protection panel and the viewing side of a liquid crystal module, excellent visibility can be ensured when looking at a display device image through not only naked eyes but also polarizing sunglasses or the like, moreover, by giving thickness to a thin substrate film functional layer with a adhesive layer, manipulation is facilitated, which can contribute to efficiency improvement in the liquid crystal module assembly operation, and furthermore, can contribute to thinning of the liquid crystal module.

## Claims

1. A transparent double-sided adhesive sheet to be placed on a viewing side of a polarizing film in an image display device,
the transparent double-sided adhesive sheet being provided with a adhesive layer on both front and back sides and provided with a layer having a linearly polarized-light-eliminating function (referred to as " linearly polarized-light-eliminating functional layer") as a middle layer, and
a thickness of the linearly polarized-light-eliminating functional layer being within the range of 1 µm to 40 µm and smaller than a thickness of the adhesive layer on either the front or the back or the adhesive layers on both front and back sides.

2. The transparent double-sided adhesive sheet according to claim 1, wherein the thickness of the entirety of the transparent double-sided adhesive sheet is 0.05 mm to 1 mm, and when sandwiched between 0.5 mm-thick soda lime glasses, satisfying all of (1) to (3) below:
(1) the retardation value at 590 nm wavelength is 20 nm to 200 nm.
(2) the total light transmittance measured according to JIS K7361-1 is 85% or greater
(3) the haze value measured according to JIS K7136 is 5% or less

3. The transparent double-sided adhesive sheet according to claim 1 or 2, wherein the in-plane birefringence of the linearly polarized light eliminating layer is 0.003 to 0.050.

4. The transparent double-sided adhesive sheet according to any of claims 1 to 3, wherein the linearly polarized light eliminating layer comprises a uniaxially or biaxially stretched film comprising a mixed resin of one species or two or more species chosen from a group comprising polyester series resin, polycarbonate series resin, polyolefin series resin, polystyrene series resin, polyether series resin, polyphenylene series resin, polyamide series resin and polyimide series resin

5. The transparent double-sided adhesive sheet according to any of claims 1 to 4, wherein the adhesive layer on either side of front and back or both sides is a adhesive layer having potential UV secondary crosslinkability formed from a adhesive composition containing a (meth)acrylic acid ester series compound and an intermolecular hydrogen-abstraction-type photopolymerization initiator, and the adhesive layer is in a prior to secondary crosslinking, primary crosslinked state.

6. The transparent double-sided adhesive sheet according to any of claims 1 to 5, wherein a parting layer is formed between the adhesive layer on one of the front and back sides and the linearly polarized-light-eliminating functional layer to configure [the transparent double-sided adhesive sheet to be releasable at the interface between the adhesive layer and the parting layer after the transparent double-sided adhesive sheet is adhered to adherend members.

7. The transparent double-sided adhesive sheet according to any of claims 1 to 6, wherein the light transmittance at 380 nm wavelength is 30% or less, and the visible light transmittance on a longer wavelength side than 430 nm wavelength is 80% or greater for either layer among the adhesive layer and the linearly polarized-light-eliminating functional layer.

8. An image display device provided with a constitution comprising a touch panel functional layer inserted between the viewing side of a liquid crystal module and a surface protection panel, the image display device being provided with a constitution wherein the transparent double-sided adhesive sheet according to any of claims 1 to 7 contacts, bonds and unifies the touch panel functional layer and the surface protection panel or the liquid crystal module and the touch panel functional layer.
